# EUROPEAN PATENT SPECIFICATION

(11) **EP 4 307 485 B1**
(45) Date of publication and mention of the grant of the patent: **25.03.2026**
(21) Application number: 23185858.0
(22) Date of filing: 17.07.2023
(51) Int. Cl.: H01R 12/58, H01R 13/6594, H01R 43/16, C21D 8/02, B21B 1/00, B21B 1/22, H01R 13/6581, B21D 53/36, C22F 1/00

(54) **A STAMPED AND BENT PART FOR CONDUCTING ELECTRICAL CURRENTS OR FOR SHIELDING**
STANZ-BIEGETEIL ZUR LEITUNG ELEKTRISCHER STRÖME ODER ZUR ABSCHIRMUNG
PIÈCE ESTAMPÉE ET COURBÉE POUR CONDUIRE DES COURANTS ÉLECTRIQUES OU POUR PROTÉGER CONTRE LA LUMIÈRE

(30) Priority: 15.07.2022 DE 202022104000 U
(43) Date of publication of application: 17.01.2024
(73) Proprietor: TE Connectivity India Private Limited, K.R. Puram Hobli, Bangalore 560066 (IN); TE Connectivity Germany GmbH, 64625 Bensheim (DE)
(72) Inventor: H P, Sukshitha, 560066 Bangalore (IN); PATAGAR, Vishnu, 560066 Bangalore (IN); BARTH, Joachim, 64625 Bensheim (DE); KHAN, Tajdar, 64625 Bensheim (DE); STALDER, Alisa, 64625 Bensheim (DE)
(74) Representative: Grünecker Patent- und Rechtsanwälte PartG mbB

(56) References cited:
- CN-A- 101 694 912
- US-A- 4 596 433
- US-A- 5 295 876
- US-A1- 2016 344 118

## Description

The invention relates to a stamped and bent part for conducting electrical currents or for shielding. The invention also relates to a shielding plate and an electrical connector.

CN 101 694 912 A describes a circular contact spring slice material strip punching structure. US 5, 295, 876 A describes a resilient metal contact brush. US 2016/344118 A1 describes a separable electrical connector and method of making it. US 4, 596, 433 A describes a lamp holder having internal cooling passages.

A stamped and bent part has a contact element for conducting electrical currents or for shielding, in order to be connected to a circuit board, for example. The contact element can be configured as a pin section. The stamped and bent part can be inserted in a housing of an electrical connector, which is connected to a mating connector or a circuit board. Depending on the geometry and position of the electrical connector to the mating connector, it is necessary for the contact section to occupy little space.

It is the object of the invention to provide a solution that is easy to manufacture and enables space-saving contact with the contact element or pin section. According to the invention, this is achieved by a stamped and bent part for conducting electric currents or for shielding, having a substantially plate-shaped section from which a pin section projects, the stamped and bent part having a main grain direction, the pin section having a bending section at which the pin section is bent about a bending axis, the bending axis being perpendicular to the main grain direction. The stamped and bent part is lying in one plane with the pin section, and the bending axis running parallel to a surface normal of the plate-shaped section.

The invention further relates to a shielding plate having at least two or three flat sides arranged at angles to one another and delimiting a volume to be shielded, at least one flat side being configured as the stamped and bent part according to the invention. The shielding plate can be formed from a stamped and bent part. Accordingly, the at least one flat side forms a plate-shaped section from which a pin section projects, the plate-shaped section and/or the pin section having a main grain direction, the pin section having a bending section at which the pin section is bent about a bending axis. The shielding plate according to the invention is characterized by the fact that the bending axis runs perpendicular to the main grain direction. With this preferred configuration, a particularly stable connection can be made to another connecting element.

The pin section of the stamped and bent part or shielding plate according to the invention not only saves space, but also allows easy contact with a circuit board, for example by soldering. The orientation of the bending axis relative to the main grain direction according to the invention allows an easier and more reliable bending process.

The solution according to the invention can be further improved with the following further developments and configurations, each of which is preferred and can be combined with one another as desired.

In a first preferred configuration, the main grain direction runs perpendicular to a thickness direction of the stamped and bent part, the plate-shaped section and/or the pin section. The main grain direction may be defined by a statistical distribution over the entire surface of the stamped and bent part. For example, the main grain direction is known by the average value of the grain direction of the stamped and bent part or shielding plate. Generally, the starting material of the stamped and bent part is produced by a rolling process that leaves a characteristic main grain direction in the material. The main grain direction corresponds to or is identical with the rolling direction. The main grain direction can be distributed essentially homogeneously in the stamped and bent part or a flat side of the shielding plate. The main grain direction is the direction in which at least 50%, 60%, 70%, 80%, 90% or 95% of the grains of the stamped and bent part are aligned.

The stamped and bent part lies in one plane with the pin section. Thus, the stamped and bent part can be inserted through a housing opening in a space-saving manner.

The bending axis runs parallel to a surface normal of the plate-shaped section.

According to another preferred configuration, the stamped and bent part has a substantially rectangular shape. In addition, the plate-shaped section in particular may have a rectangular shape. The pin section may be formed from the stamped and bent part and protrude from the rectangular shape.

According to a preferred configuration, the stamped and bent part can be made from one piece.

According to a preferred configuration, the pin section may project from the plate-shaped section longitudinally to the main grain direction.

According to a preferred configuration, the pin section can be configured as an integrated solder pin and/or connectable to a circuit board. This simplifies the connection to a circuit board.

According to a preferred configuration, the bending section can be directly adjacent to the plate-shaped section at one end and adjacent to a non-bent part of the pin section at the other end.

Thus, the plate-shaped section constitutes a base element from which the bending section protrudes directly. Thus, the bending section may be directly adjacent to the base element.

According to a preferred configuration, the pin section may be bent 30°, 45° or 90° about the bending axis.

According to a preferred configuration, the pin section, in particular the non-bent part thereof, may be plated. For example, the plating may be done with nickel. Alternatively, the pin section may be plated with another chemical element. Additionally, the entire stamped and bent part may be plated.

According to a preferred configuration, the main grain direction can correspond to a rolling direction of the stamped and bent part. This configuration not only permits particularly space-saving bending angles with a small bending radius, but is also particularly robust.

According to a further preferred configuration of the shielding plate according to the invention, a flat side can be bent about a second bending axis, the second bending axis running perpendicular to a surface normal of the plate-shaped section and parallel to the main grain direction. This allows the volume to be shielded to be precisely delimited.

According to a further preferred configuration, the stamped and bent part according to the invention is inserted into a housing of an electrical connector. Alternatively or cumulatively, the shielding plate according to the invention can be inserted into the housing of the electrical connector.

According to another preferred configuration, the pin section protrudes through a wall of the housing of the electrical connector, one side of the wall facing the plate-shaped section and the opposite side of the wall facing the part of the pin section protruding through the wall, the bending section of the pin section being located on the opposite side of the wall.

According to another preferred configuration, the part of the pin section that protrudes through the housing may form a contact section which is accessible outside the housing.

An electrical connector according to the invention may be manufactured by the following method: Inserting a stamped and bent part into a housing of the electrical connector; bending a pin section, about a bending axis, the bending axis being perpendicular to the main grain direction of the stamped and bent and the main grain direction being parallel with the insertion direction in which the stamped and bent part is inserted into the housing.

In the following, the invention is explained in more detail by means of preferred configurations with reference to the drawings. The preferred further developments and configurations shown therein are independent of each other and can be combined with each other as required in the application.

It is shown by:
- Fig. 1a: a schematic 3-dimensional projection view of an exemplary configuration of a stamped and bent part;
- Fig. 1b: a schematic projection of the stamped and bent part from Fig. 1 in a plane;
- Fig. 1c: a detailed sketch of the main grain direction in the pin section of the stamped and bent part in the same plane as in Fig. 1b;
- Fig. 2a: a schematic 3-dimensional projection view of an exemplary configuration of a stamped and bent part according to the invention;
- Fig. 2b: a schematic projection view of the exemplary configuration of Fig. 2a in a view projected onto a plane;
- Fig. 3: a schematic projection view of a further exemplary configuration of a shielding plate according to the invention with two flat sides;
- Fig. 4a: a schematic 3-dimensional projection view of an exemplary configuration of a shielding plate;
- Fig. 4b: a schematic 3-dimensional projection view of an exemplary configuration of a shielding plate according to the invention with three flat sides;
- Fig. 5: a schematic representation of an exemplary configuration of an electrical connector according to the invention;
- Fig. 6: a schematic side view of an exemplary configuration of an electrical connector according to the invention;
- Fig. 7: a macro photograph of a stamped and bent part configuration according to the invention.

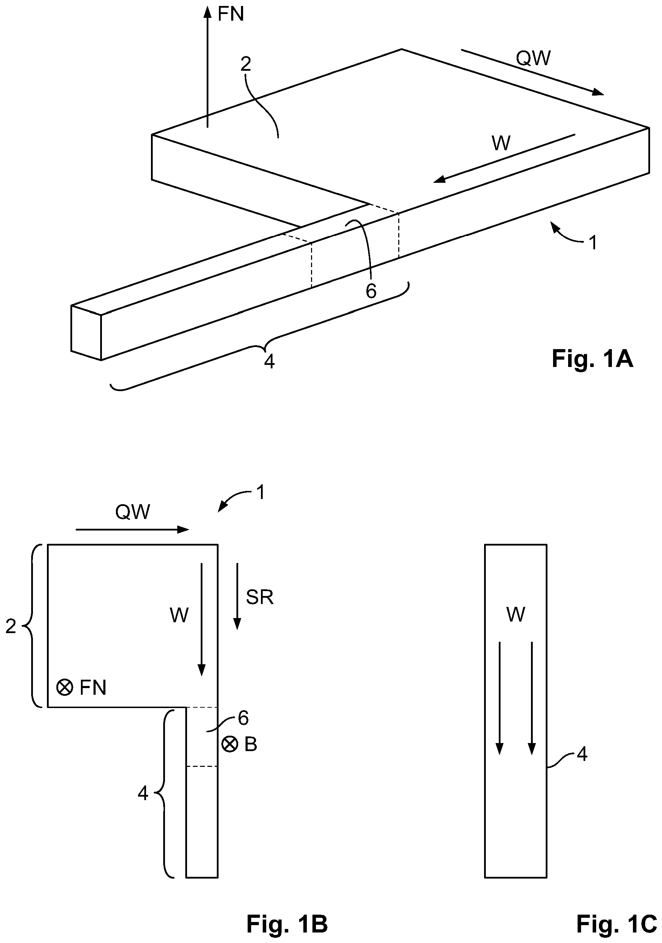

In Figs. 1a and 1b, an exemplary stamped and bent part 1 is shown before it is formed into the shape according to the invention. The stamped and bent part 1 consists of an electrically conductive material, such as iron or copper. It can also be configured as a metal sheet. By means of a rolling process, such a stamped and bent part can be manufactured in a substantially plate-shaped form. In this way, a plate with a predetermined thickness is generated. Alternatively, other manufacturing processes can be used to manufacture plates of metal. By the manufacturing process, the stamped and bent part 1 acquires a characteristic inherent in the workpiece, namely a grain direction or main grain direction W. Without limiting generality, it may be assumed, for example, that the stamped and bent part 1 has been manufactured from sheet metal by a rolling process. By rolling in the rolling direction, the grain structure of the sheet material is changed anisotropically. This anisotropy, which is characteristic of the main grain direction, is reflected (in particular in the case of sheet) as a line-like texture on the material surface. Thus, the main grain direction or rolling direction can be recognized from the line-like texture. Depending on the course of the main grain direction, the bending properties of the workpiece vary. Therefore, it is helpful to know the main grain direction for the forming of a workpiece. The main grain direction W of a stamped and bent part 1 can be determined as a statistical average of the grain orientation over the entire surface of the stamped and bent part 1. Essentially, the grain orientation or main grain orientation W corresponds to the rolling direction of the associated manufacturing process.

The stamped and bent part 1 includes a substantially plate-shaped section 2 and a pin section 4 that protrudes from the plate-shaped section 2. As shown in Figs. 1a and 1b, the pin section 4 protrudes from the plate-shaped section 2 in the same direction as the main grain direction W. Fig. 1c shows a detailed view of the pin section 4 and the main grain direction W inherent in the pin section 4 before the pin section 4 is formed. In the stamped and bent part shown in Fig. 1, the main grain direction W is the same for the plate-shaped section 2 and the pin section 4. A surface normal FN of the plate-shaped section 2 runs parallel to the thickness direction of the stamped and bent part 1. Furthermore, the pin section 4 includes a bending section 6. The bending section 6 is directly adjacent to the plate-shaped section 2. According to one configuration according to the invention, the pin section 4 is bent about a bending axis B at the bending section 6. The bending axis B runs parallel to the surface normal FN. The bending axis B is thus perpendicular to the main grain direction W. In other words, bending is transverse to the main grain direction or rolling direction.

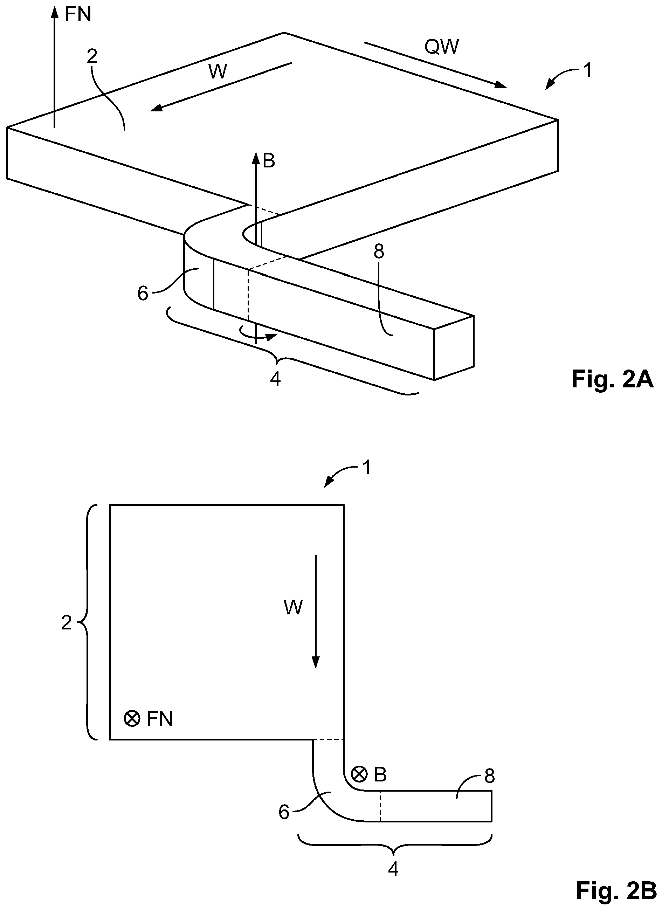

Figs. 2a and 2b show schematic representations of the stamped and bent part 1 after forming and show an exemplary configuration of the stamped and bent part 1 according to the invention. In this context, the pin section 4 is bent about the bending axis B. When the pin section 4 is formed, the bending section 6 may abut the bending axis B. In the exemplary configuration, the pin section 4 is bent approximately perpendicular to the main grain direction W, so that a non-bent part 8 of the pin section 4 now protrudes transversely to the main grain direction QW. Fig. 2b shows a projection view of the stamped and bent part 1 of Fig. 2a in a plane. The main grain direction W of the stamped and bent part 1 is substantially parallel to a longitudinal edge of the plate-shaped section 2. The stamped and bent part 1 according to the invention, which is generated by forming, lies with its pin section 4 in a plane.

Deformation can be done by bending or other plastic forming processes.

Substantially, the stamped and bent part 1 may have a rectangular shape with the pin section 4 protruding from the substantially plate-shaped section 2 and/or being formed from the stamped and bent part. Thus, the pin section 4 projects from the plate-shaped section 2 along the main grain direction W.

The pin section 4 or the non-bent part 8 thereof can be configured as an integrated solder pin. This solder pin can be configured to be connectable to a circuit board.

Furthermore, the pin section 4 or the entire stamped and bent part 1 can be plated. For example, the plating can be done with nickel.

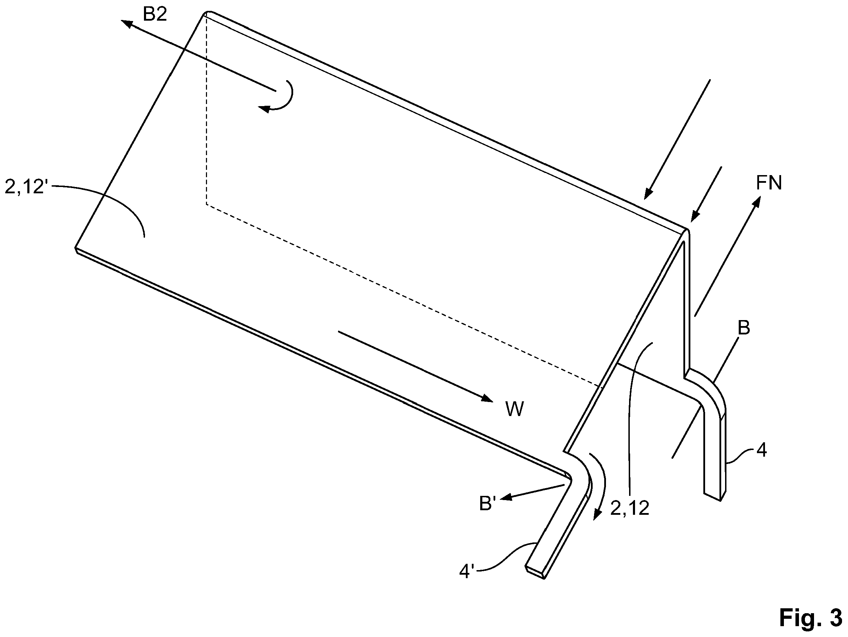

Fig. 3 shows an exemplary configuration of a shielding plate 10 according to the invention with two flat sides 12 arranged at an angle to each other, which delimits a volume to be shielded. In the configuration shown in Fig. 3, the two flat sides 12 each configure a plate-shaped section 2 from which a pin section 4 projects. The respective pin section 4 of the flat sides 12 projects from the plate-shaped section 2 in the direction of the main grain direction W of the respective flat side 12. The bending axis B of the pin section 4 associated with one flat side 12 runs differently from the bending axis B' of the pin section 4' associated with the other flat side 12'. The respective bending axes B and B' are each parallel to the surface normals FN of the pin section or plate-shaped section associated with the flat side. Thus, the bending axis B to one flat side 12 is parallel to the surface normal FN and at the same time perpendicular to the main grain direction W of the plate-shaped section forming the flat side 12. The flat sides 12 can be bent at a second bending axis B2 at an angle to one another, the second bending axis B2 being perpendicular to the surface normal FN of the plate-shaped section 2 of a flat side 12 and parallel to the associated main grain direction W thereof.

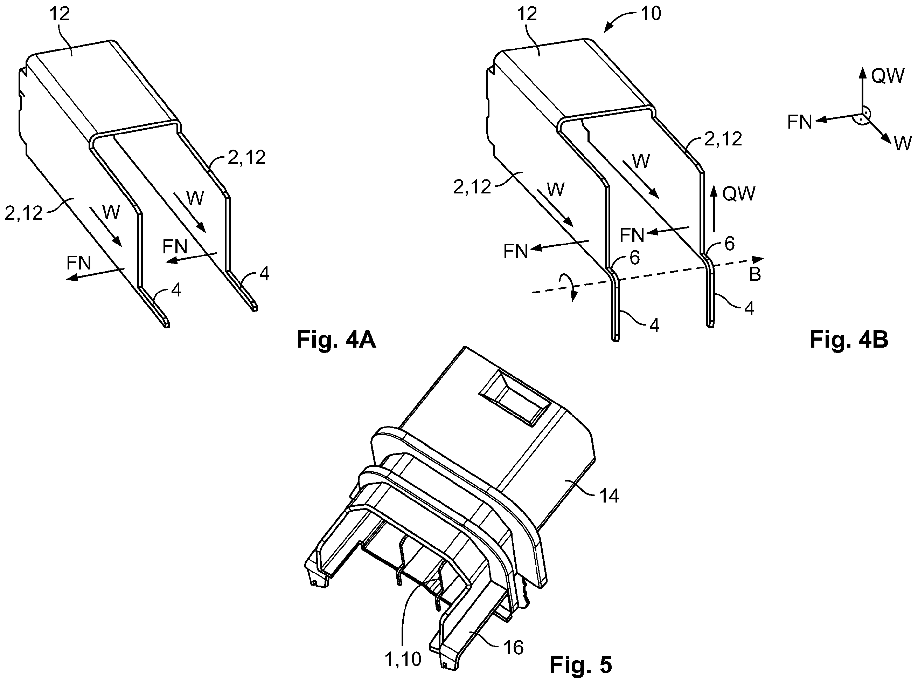

Fig. 4a shows an exemplary configuration of a shielding plate 10 before the pin sections are bent around a bending axis according to the invention. Fig. 4b shows an exemplary configuration of a shielding plate 10 with three flat sides 12 after the pin sections 4 are bent about the bending axis B according to the invention. In Figs. 4a and 4b, two parallel flat sides 12 are connected by a third flat side 12 that is perpendicular to the parallel flat sides 12.

Fig. 5 shows an exemplary configuration of an electrical connector 14 according to the invention. A stamped and bent part 1 or a shielding plate 10 may be inserted in the housing 16.

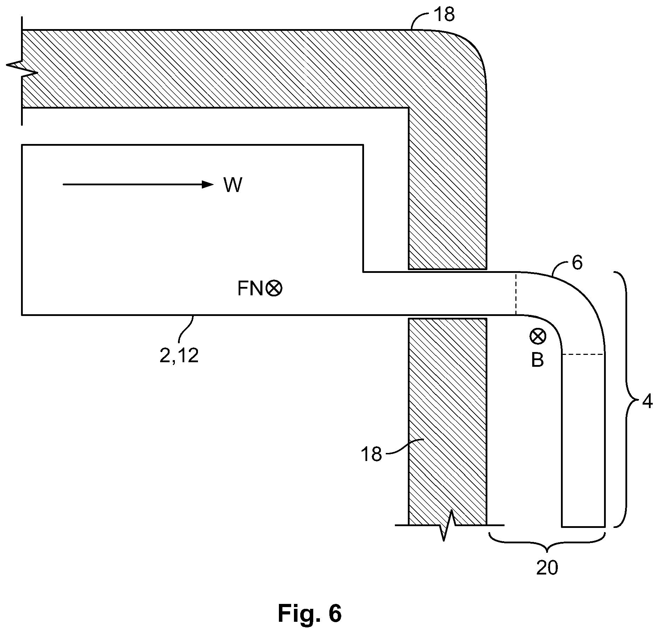

Fig. 6 shows a detailed view of an electrical connector 14 according to the invention. According to this exemplary configuration, the pin section 4 projects through a wall 18 of the housing 16. The plate-shaped section 2 is thereby located on one side of the wall 18 and the bending section 6 of the pin section 4 is located on the other side of the wall 18. In other words, the plate-shaped section 2 is located on the side of the wall 18 that delimits an interior space of the housing, and the bending section 6 of the pin section 4 is located on an outside of the wall 18 that delimits an exterior space of the housing 16. According to this configuration, the bending section 6 and/or the bending axis B about which the pin section 4 is bent is located on the side of the wall where the part of the pin section 4 that protrudes through the wall is located.

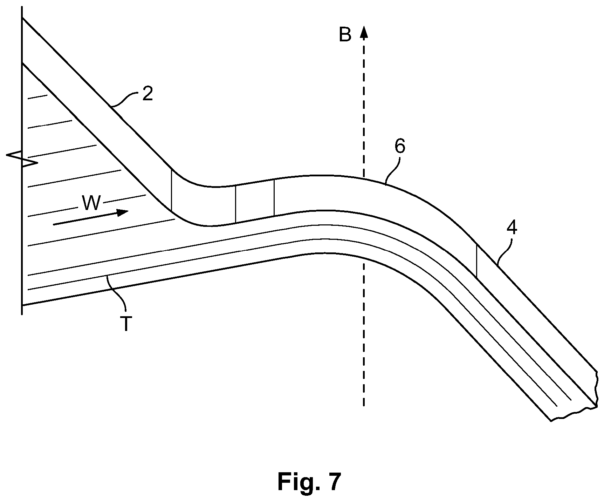

Fig. 7 shows a macro photograph of a stamped and bent part 1 or shielding plate 10 according to the invention. Based on the line-like texture T of the plate-shaped section 2, the main grain direction W can be seen along the line-like texture. As previously explained, this texture can be created by a rolling process that works the initial workpiece in a rolling direction. The texture then arises as a line-like pattern that runs along the main grain direction W or rolling direction, because the rolling direction substantially coincides with the grain direction or main grain direction W.

### List of Reference Signs

- 1: stamped and bent part
- 2: plate-shaped section
- 4, 4': pin section
- 6: bending section
- 8: non-bent part
- 10: shielding plate
- 12, 12': flat side
- 14: electrical connector
- 16: housing
- 18: wall
- 20: part of the pin section protruding through the wall
- B, B': bending axis
- B2: second bending axis
- W: main grain direction
- FN: surface normal
- QW: direction transverse to the main grain direction

## Claims

1. Stamped and bent part (1) for conducting electric currents or for shielding, having a substantially plate-shaped section (2) from which a pin section (4) projects, the stamped and bent part (1) having a main grain direction (W) forming a line-like texture on the material surface and being substantially parallel to a longitudinal edge of the plate-shaped section (2), the pin section (4) having a bending section (6) at which the pin section (4) is bent about a bending axis (B), the bending axis (B) being perpendicular to the main grain direction (W), **characterized in that**
the stamped and bent part (1) lying in one plane with the pin section (4), and
the bending axis (B) running parallel to a surface normal (FN) of the plate-shaped section (2).

2. Stamped and bent part (1) according to claim 1, the main grain direction (W) being perpendicular to a thickness direction of the plate-shaped section (2) and/or the pin section (4).

3. Stamped and bent part (1) according to one of the preceding claims, the main grain direction (W) being distributed substantially homogeneously in the stamped and bent part.

4. Stamped and bent part (1) according to one of the preceding claims, the stamped and bent part (1) having a substantially rectangular shape, the pin section (4) being formed from the stamped and bent part and protruding from the rectangular shape.

5. Stamped and bent part (1) according to one of the preceding claims, the pin section (4) projecting from the plate-shaped section along the main grain direction (W).

6. Stamped and bent part (1) according to any one of the preceding claims, the pin section (4) being an integral solder pin.

7. Stamped and bent part (1) according to one of the preceding claims, the bending section (6) being directly adjacent to the plate-shaped section at one end and adjacent to a non-bent part (8) of the pin section (4) at the other end.

8. Stamped and bent part (1) according to one of the preceding claims,
the pin section (4) being bent by 30°, 45° or 90° about the bending axis (B); and/or
the pin section (4) being plated, preferably with nickel; and/or
the pin section (4) being configured to be connectable to a circuit board; and/or
the main grain direction (W) corresponding to a rolling direction of the stamped and bent part.

9. Stamped and bent part (1) according to one of the preceding claims, the plate-shaped section (2) and/or the pin section (4) having the main grain direction (W).

10. Shielding plate (10), having at least two or three flat sides (12) arranged at an angle to one another and delimiting a volume to be shielded, at least one flat side (12) being configured as the stamped and bent part (1) according to any one of claims 1-9.

11. Shielding plate (10) according to claim 10, the flat sides (12) being bent about a second bending axis (B2), the second bending axis (B2) being perpendicular to a surface normal (FN) of the plate-shaped section and parallel to the main grain direction (W).

12. Electrical connector (14) with a stamped and bent part (1) inserted into a housing (16) according to one of claims 1 to 9 or a shielding plate (10) inserted into the housing (16) according to claim 10 or 11.

13. Electrical connector (14) according to claim 12, the pin section (4) protruding through a wall (18) of the housing (16), one side of the wall facing the plate-shaped section (2) and the opposite side of the wall facing the part (20) of the pin section (4) protruding through the wall, the bending section (6) of the pin section (4) being located on the opposite side of the wall.

14. Electrical connector (14) according to claim 12 or 13, the part of the pin section (4) protruding through the housing forming a contact section and being accessible outside the housing (16).

## Patentansprüche

1. Gestanztes und gebogenes Teil (1) zum Leiten elektrischer Ströme oder zum Abschirmen, das einen im Wesentlichen plattenförmigen Abschnitt (2) aufweist, von dem ein Stiftabschnitt (4) vorsteht, wobei das gestanzte und gebogene Teil (1) eine Haupt-Faserrichtung (W) hat, die eine linienartige Textur an der Materialoberfläche bildet und im Wesentlichen parallel zu einer Längskante des plattenförmigen Abschnitts (2) ist,
der Stiftabschnitt (4) einen Biegeabschnitt (6) aufweist, an dem der Stiftabschnitt (4) um eine Biegeachse (B) herum gebogen ist, wobei die Biegeachse (B) senkrecht zu der Haupt-Faserrichtung (W) ist,
**dadurch gekennzeichnet, dass**
das gestanzte und gebogene Teil (1) in einer Ebene mit dem Stiftabschnitt (4) liegt, und die Biegeachse (B) parallel zu einer Oberflächennormalen (FN) des plattenförmigen Abschnitts (2) verläuft.

2. Gestanztes und gebogenes Teil (1) nach Anspruch 1, wobei die Haupt-Faserrichtung (W) senkrecht zu einer Dickenrichtung des plattenförmigen Abschnitts (2) und/oder des Stiftabschnitts (4) ist.

3. Gestanztes und gebogenes Teil (1) nach einem der vorangehenden Ansprüche, wobei die Haupt-Faserrichtung (W) in dem gestanzten und gebogenen Teil im Wesentlichen homogen verteilt ist.

4. Gestanztes und gebogenes Teil (1) nach einem der vorangehenden Ansprüche, wobei das gestanzte und gebogene Teil (1) eine im Wesentlichen rechteckige Form hat und der Stiftabschnitt (4) aus dem gestanzten und gebogenen Teil ausgebildet ist und von der rechteckigen Form vorsteht.

5. Gestanztes und gebogenes Teil (1) nach einem der vorangehenden Ansprüche, wobei der Stiftabschnitt (4) in der Haupt-Faserrichtung (W) von dem plattenförmigen Abschnitt vorsteht.

6. Gestanztes und gebogenes Teil (1) nach einem der vorangehenden Ansprüche, wobei der Stiftabschnitt (4) ein integraler Lötstift ist.

7. Gestanztes und gebogenes Teil (1) nach einem der vorangehenden Ansprüche, wobei der Biegeabschnitt (6) an einem Ende direkt an den plattenförmigen Abschnitt angrenzt und an dem anderen Ende an einen nicht gebogenen Teil (8) des Stiftabschnitts (4) angrenzt.

8. Gestanztes und gebogenes Teil (1) nach einem der vorangehenden Ansprüche,
wobei der Stiftabschnitt (4) um 30°, 45° oder 90° um die Biegeachse (B) herum gebogen ist; und/oder
der Stiftabschnitt (4) vorzugsweise mit Nickel plattiert ist; und/oder
der Stiftabschnitt (4) so ausgeführt ist, dass er mit einer Leiterplatte verbunden werden kann; und/oder
die Haupt-Faserrichtung (W) einer Walzrichtung des gestanzten und gebogenen Teils entspricht.

9. Gestanztes und gebogenes Teil (1) nach einem der vorangehenden Ansprüche, wobei der plattenförmige Abschnitt (2) und/oder der Stiftabschnitt (4) die Haupt-Faserrichtung (W) aufweisen/aufweist.

10. Abschirmplatte (10), die wenigstens zwei oder drei flache Seiten (12) aufweist, die in einem Winkel zueinander angeordnet sind und einen abzuschirmenden Raum begrenzen, wobei wenigstens eine flache Seite (12) als das gestanzte und gebogene Teil (1) nach einem der Ansprüche 1 - 9 ausgeführt ist.

11. Abschirmplatte (10) nach Anspruch 10, wobei die flachen Seiten (12) um eine zweite Biegeachse (B2) herum gebogen sind, wobei die zweite Biegeachse (B2) senkrecht zu einer Oberflächennormalen (FN) des plattenförmigen Abschnitts und parallel zu der Haupt-Faserrichtung (W) ist.

12. Elektrischer Verbinder (14) mit einem in ein Gehäuse (16) eingeführten gestanzten und gebogenen Teil (1) nach einem der Ansprüche 1 bis 9 oder einer in das Gehäuse (16) eingeführten Abschirmplatte (10) nach Anspruch 10 oder 11.

13. Elektrischer Verbinder (14) nach Anspruch 12, wobei der Stiftabschnitt (4) durch eine Wand (18) des Gehäuses (16) hindurch vorsteht, eine Seite der Wand dem plattenförmigen Abschnitt (2) zugewandt ist und die gegenüberliegende Seite der Wand dem Teil (20) des Stiftabschnitts (4) zugewandt ist, der durch die Wand hindurch vorsteht, und sich der Biegeabschnitt (6) des Stiftabschnitts (4) an der gegenüberliegenden Seite der Wand befindet.

14. Elektrischer Verbinder (14) nach Anspruch 12 oder 13, wobei der Teil des Stiftabschnitts (4), der durch das Gehäuse hindurch vorsteht, einen Kontaktabschnitt bildet und außerhalb des Gehäuses (16) zugänglich ist.

## Revendications

1. Partie estampée et pliée (1) pour une conduction de courants électriques ou pour une protection, ayant une section sensiblement en forme de plaque (2) à partir de laquelle une section de broche (4) fait saillie, la partie estampée et pliée (1) ayant une direction principale de grain (W) formant une texture de type chaîne sur la surface de matériau et étant sensiblement parallèle à un bord longitudinal de la section en forme de plaque (2), la section de broche (4) ayant une section de pliage (6) au niveau de laquelle la section de broche (4) est pliée autour d'un axe de pliage (B), l'axe de pliage (B) étant perpendiculaire à la direction principale de grain (N), caractérisée en ce
la partie estampée et pliée (1) repose dans un plan avec la section de broche (4), et l'axe de pliage (B) s'étend parallèlement à une normale de surface (FN) de la section en forme de plaque (2).

2. Partie estampée et pliée (1) selon la revendication 1, la direction principale de grain (W) étant perpendiculaire à une direction d'épaisseur de la section en forme de plaque (2) et/ou de la section de broche (4).

3. Partie estampée et pliée (1) selon l'une des revendications précédentes, la direction principale de grain (W) étant distribuée de manière sensiblement homogène dans la partie estampée et pliée.

4. Partie estampée et pliée (1) selon l'une des revendications précédentes, la partie estampée et pliée (1) ayant une forme sensiblement rectangulaire, la section de broche (4) étant formée à partir de la partie estampée et pliée et faisant saillie depuis la forme rectangulaire.

5. Partie estampée et pliée (1) selon l'une des revendications précédentes, la section de broche (4) faisant saillie depuis la section en forme de plaque le long de la direction principale de grain (W).

6. Partie estampée et pliée (1) selon l'une quelconque des revendications précédentes, la section de broche (4) étant une broche de soudure intégrée.

7. Partie estampée et pliée (1) selon l'une des revendications précédentes, la section de pliage (6) étant directement adjacente à la section en forme de plaque à une extrémité et adjacente à une partie non-pliée (8) de la section de broche (4) à l'autre extrémité.

8. Partie estampée et pliée (1) selon l'une des revendications précédentes,
la section de broche (4) étant pliée sur 30°, 45° ou 90° autour de l'axe de pliage (B) ; et/ou
la section de broche (4) étant plaquée, de préférence à l'aide de nickel ; et/ou
la section de broche (4) étant configurée pour pouvoir être connectée à une carte de circuit imprimé ; et/ou
la direction principale de grain (W) correspondant à une direction de laminage de la partie estampée et pliée.

9. Partie estampée et pliée (1) selon l'une des revendications précédentes, la section en forme de plaque (2) et/ou la section de broche (4) ayant la direction principale de grain (W).

10. Plaque de protection (10), ayant au moins deux ou trois faces plates (12) disposées selon un angle les unes par rapport aux autres et délimitant un volume à protéger, au moins un côté plat (12) étant configuré sous la forme de la partie estampée et pliée (1) selon l'une quelconque des revendications 1 à 9.

11. Plaque de protection (10) selon la revendication 10, les côtés plats (12) étant pliés autour d'un second axe de pliage (B2), le second axe de pliage (B2) étant perpendiculaire à une normale de surface (FN) de la section en forme de plaque et parallèle à la direction principale de grain (W).

12. Connecteur électrique (14) ayant une partie estampée et pliée (1) insérée dans un boîtier (16) selon l'une des revendications 1 à 9 ou une plaque de protection (10) insérée dans le boîtier (16) selon la revendication 10 ou 11.

13. Connecteur électrique (14) selon la revendication 12, la section de broche (4) faisant saillie à travers une paroi (18) du boîtier (16), un côté de la paroi faisant face à la section en forme de plaque (2) et le côté opposé de la paroi faisant face à la partie (20) de la section de broche (4) qui fait saillie à travers la paroi, la section de pliage (6) de la section de broche (4) étant située sur le côté opposé de la paroi.

14. Connecteur électrique (14) selon la revendication 12 ou 13, la partie de la section de broche (4) faisant saillie à travers le boîtier formant une section de contact et étant accessible à l'extérieur du boîtier (16).
